# EUROPEAN PATENT APPLICATION

(11) **EP 1 056 269 A1**
(43) Date of publication of application: **29.11.2000**
(21) Application number: 00303876.7
(22) Date of filing: 09.05.2000
(51) Int. Cl.: H04M 15/28, H04Q 7/38

(54) **Method and apparatus for transmission of advice of charge billing information using short message service in a wireless telecommunications network**

(30) Priority: 26.05.1999 US 318766
(71) Applicant: LUCENT TECHNOLOGIES INC., Murray Hill, New Jersey 07974-0636 (US)
(72) Inventor: Mizikovsky, Semyon B., Morganville, NJ 07751 (US)
(74) Representative: Buckley, Christopher Simon Thirsk

(57) **Abstract**

A unique method and apparatus for ensuring delivery of accurate and complete advice of charge (AOC) information to a wireless terminal as soon as the advice of charge information is assembled by a billing center and the wireless terminal registers with a system is disclosed. A Short Message Service (SMS) mechanism is used to deliver the AOC information to the wireless terminal from an SMS Message Center. When a billing record for a particular wireless terminal call has been assembled by the billing center, the billing record is sent to an SMS Message Center. The SMS Message Center queries the Home Location Register (HLR) of the wireless terminal to determine the current location and address of the wireless terminal. The HLR will return the current location and address of the system in which the wireless terminal is currently registered to the SMS Message Center. Utilizing this information, the SMS Message Center can then send the billing record to the wireless terminal. Since the current location and address of the wireless terminal are known before the AOC information is sent, the risk of losing the AOC information is significantly reduced and the AOC information will be delivered to the wireless terminal.

## Description

### Field of the Invention

The present invention relates generally to telecommunications systems and more particularly to a method and system of transmitting "Advice of Charge" (AOC) billing information using short message service (SMS) signaling technology in a wireless communication system.

### Description of the Related Art

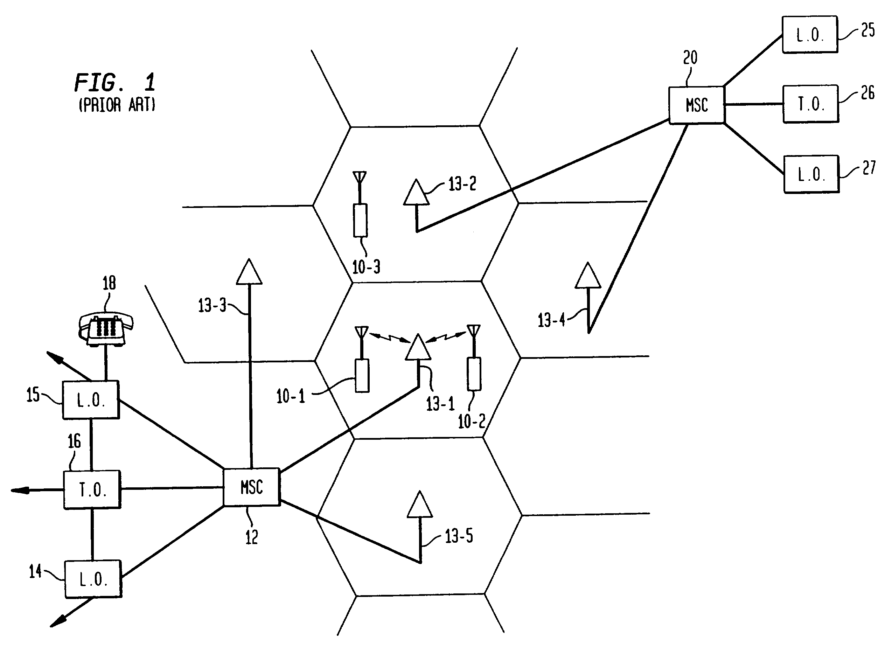

Fig. 1 depicts a block diagram of a portion of a typical wireless telecommunications system that provides wireless telecommunications service to a number of wireless terminals (e.g., wireless terminals 10-1 through 10-3) that are situated within a geographic region. The heart of a typical wireless telecommunications system are the Mobile Switching Centers (MSC) 12, 20, which may also be known as a Wireless Switching Center (WSC) or Mobile Telephone Switching Office (MTSO). Typically, each MSC 12, 20 is connected to a plurality of base stations that are dispersed throughout the geographic area serviced by the system and to local- and toll-offices (e.g., local-offices 14 or 24, local-offices 15 or 25 and toll-offices 16 or 26). For example, as illustrated in Fig. 1, MSC 12 is connected to base stations 13-1, 13-3 and 13-5, local-offices 14, 15 and toll-office 16, while MSC 20 is connected to bases stations 13-2 and 13-4, local-offices 24 and 25, and toll-office 26. MSCs 12, 20 are responsible for, among other things, establishing and maintaining calls between wireless terminals and between a wireless terminal and a wireline terminal, such as telephone 18, which is connected to the system via the local and/or long distance networks.

The geographic area serviced by a wireless telecommunications system is partitioned into a number of spatially distinct areas called "cells." As depicted in Fig. 1, each cell is schematically represented by a hexagon; in practice, however, each cell usually has an irregular shape that depends on the topology of the terrain and configuration of buildings in the area serviced by the cell. Typically, each cell contains a base station, which comprises the radios and antennas that the base station uses to communicate with the wireless terminals in that cell and also comprises the transmission equipment that the base station uses to communicate with the MSC servicing that base station.

For example, when wireless terminal 10-1 desires to communicate with wireless terminal 10-2, wireless terminal 10-1 transmits the desired information to bases station 13-1, which relays the information to MSC 12. Upon receipt of the information, and with the knowledge that it is intended for wireless terminal 10-2, MSC 12 then returns the information back to base station 13-1, which relays the information, via radio, to wireless terminal 10-2.

Typically, a cell can contain dozens or hundreds of wireless terminals, each of which is either powered-on or powered-off. When a wireless terminal powers on or enters in an area covered by a different MSC, the wireless terminal will register with the MSC by sending identification information to the MSC via a base station. This allows the wireless terminal to roam between different locations without a disruption in service. For example, recall the previous example in which wireless terminal 10-1 desired to communicate with wireless terminal 10-2. Since both wireless terminals 10-1 and 10-2 were within the cell serviced by base station 13-1, MSC 12 can be used as the only relay point. If wireless terminal 10-1 roams out of the cell serviced by base station 13-1 and into the cell serviced by base station 13-2, when wireless terminal 10-1 transmits information to base station 13-2 it will be relayed to MSC 20. MSC 20 will relay the information to MSC 12, which will send the information to base station 13-1 for relay, via radio, to wireless terminal 10-2. Thus, a call may typically span several MSCs. The use of more than one MSC during a call can complicate the processing of billing records as described below.

Typically, billing information in a wireless telecommunications system is processed as follows. When a wireless terminal powers on for access to a telecommunications system, it will first enter a system determination stage and use specific pre-determined system determination criteria to register with a particular system that services the geographic area in which the wireless terminal is located. For example, a wireless terminal will typically choose a system with the strongest signal in the area and then determine if this system is one of the preferred systems according to contractual arrangements, i.e., whether this system is a "friendly" operator or not, and then register with a serving MSC in that system. When the wireless terminal desires to set-up a call, i.e., either place a call or receive a call, the serving MSC generates a Call Record, where it accumulates information concerning the number of Call Units (minutes or seconds, depending upon local billing capabilities). This Call Record has a unique identity for the serving MSC.

During the call, the wireless terminal does not monitor the system information and the system on which the call is being carried is transparent to the wireless terminal. The system operator must handle the call, passing it off to a different MSC within that system or even a different system carrier as the wireless terminal roams. When the call is handed off from one MSC to another MSC in the same or a different system, the previous Call Record is closed, and a new Call Record is created. When the call is completed, the last Call Record is closed. Also, once the call is ended, the wireless terminal will again enter the system determination stage and search for the best system in the area in which the wireless terminal is now located. Thus, in many instances it is possible that a call will end on a first system and the wireless terminal will immediately register with a different system after the call has completed.

All of the Call Records for a particular call are associated with that call by a unique Call Reference Number (CRN) which is coordinated by a Home Location Register (HLR) within the home system. Each closed Call Record is delivered to an external billing center. The billing center correlates the Call Records associated with each call and assembles one billing record. The billing center will then select the rate or rates for the call depending on multiple factors, such as for example initial connection location (roaming charge), contractual rates (unique for each subscription), origination or termination (different cost), land-line connection fee and cost, inter-carrier business agreements, taxes, etc. The billing record, also known as advice of charge (AOC) information, can then be sent to the customer periodically, such as for example once a month.

There are problems, however, with the conventional process for compiling billing information. For the most part, creation of an accurate billing record is a complicated process that involves many uncorrelated operational entities. For example, the Call Records assembled by different MSCs are not coordinated. The last MSC that completed the call has no idea how long the call was in progress before hand-off or where the call originated. The MSCs also have no knowledge of any billing criteria for the selection of rates as described above.

Furthermore, the delivery of Call Records from an MSC to a billing center is not performed in real time and may typically be performed over several hours or several days. For example, in a wide network of multiple carriers and service providers an average delay between the call completion and billing record assembly may be approximately 20 minutes, while in some cases the delay may be as large as 24 hours, since some MSCs deliver the Call Record tapes to the billing center via courier once a day. Additionally, the home system typically does not want to share with other service providers that may be roaming partners any detailed specifics of the customer contract and billing costs.

Furthermore, there is no method available to deliver the billing record to the customer as soon as it has been completed. In many cases, a customer can not wait for the monthly billing statement to be advised of the charges for particular calls. For example, if a customer desires to prepare an expense account, it would be beneficial to have billing information delivered to the customer via the wireless terminal as soon as it is prepared. However, once the complete billing record has been prepared by the billing center, there is no way to ensure that it will be delivered and received by the wireless terminal. For example, once the billing record has been compiled, the billing center may no longer know with which system the wireless terminal is registered, since as described above a wireless terminal may end a call on one system and immediately register with another, different system. Thus, even if the billing center were to send the advice of charge (AOC) information to the wireless terminal via the system on which the call was completed, there is no way to ensure that the AOC information will be delivered to the wireless terminal, resulting in the possibility of the AOC information being lost.

Thus, there exists a need for a method and apparatus for a coordinated billing system that can ensure delivery of complete and accurate advice of charge billing information from the billing center to a wireless terminal as soon as the information is assembled.

### Summary Of The Invention

The present invention provides a unique method and apparatus for ensuring delivery of accurate and complete advice of charge (AOC) information to a wireless terminal utilizing short message service (SMS) technology as soon as the advice of charge information is assembled by a billing center and the wireless terminal registers with a system.

In accordance with the present invention, a Short Message Service (SMS) mechanism is used to deliver the AOC information to the wireless terminal from an SMS Message Center. When a billing record for a particular wireless terminal call has been assembled by the billing center, the billing record is sent to an SMS Message Center. The SMS Message Center queries the Home Location Register (HLR) of the wireless terminal to determine the current location and address of the wireless terminal. The HLR will return the current location and address of the system in which the wireless terminal is currently registered to the SMS Message Center. Utilizing this information, the SMS Message Center sends the AOC information to the wireless terminal in SMS format. Since the current location and address of the wireless terminal are known before the AOC information is sent, the risk of losing the AOC information is significantly reduced and the AOC information will be delivered to the wireless terminal.

These and other advantages and features of the invention will become apparent from the following detailed description of the invention which is provided in connection with the accompanying drawings.

### Brief Description Of The Drawings

FIGURE 1 illustrates in block diagram form a portion of a typical wireless telecommunications system that provides wireless telecommunications service to a number of wireless terminals that are situated within a geographic region;
FIGURE 2 illustrates in block diagram form a portion of a system for delivering AOC information to a wireless terminal in accordance with the present invention; and
FIGURE 3 illustrates in flowchart form a method for delivering AOC information to a wireless terminal in accordance with the present invention.

### Detailed Description

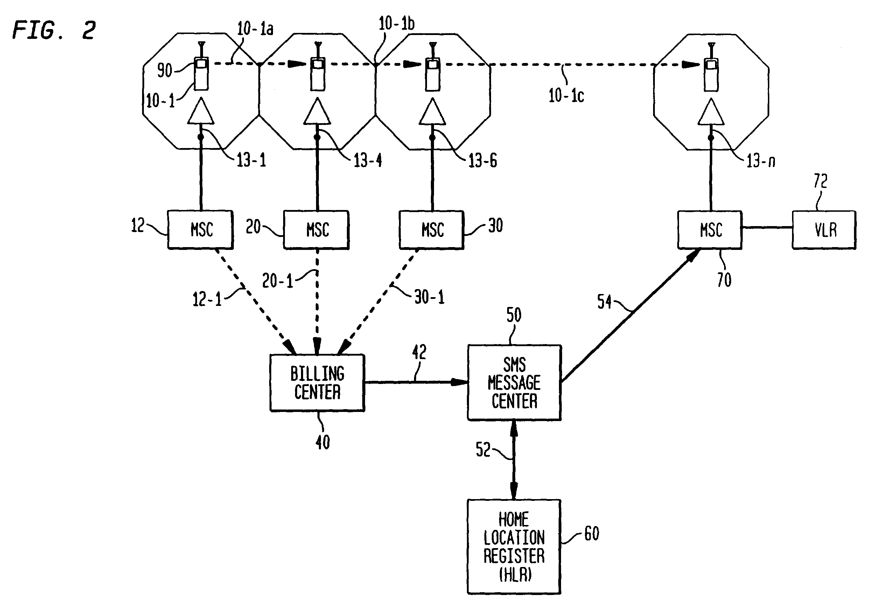

The present invention will be described as set forth in the embodiments illustrated in Figs. 2-3. Other embodiments may be utilized and structural, logical or programming changes may be made without departing from the spirit or scope of the present invention. Like items are referred to by like reference numerals throughout the description.

The present invention uses the Short Message Service (SMS) to deliver complete and accurate AOC information to the wireless terminal from the billing center as soon as the information is assembled. When a billing record for a particular wireless terminal call has been assembled by the billing center, the billing record is sent to an SMS Message Center. The SMS Message Center queries the Home Location Register (HLR) of the wireless terminal to determine the current location and address of the wireless terminal. The HLR will return the current location and address of the system in which the wireless terminal is currently registered to the SMS Message Center. Utilizing this information, the SMS Message Center can then send the AOC information to the wireless terminal. Since the current location and address of the wireless terminal are known before the AOC information is sent, the risk of losing the AOC information is significantly reduced and the AOC information will be reliably delivered to the wireless terminal.

Fig. 2 illustrates in block diagram form a portion of a system for delivering AOC information to a wireless terminal 10-1 in accordance with the present invention. To illustrate the invention, it will be assumed that a terminal unit, e.g., wireless terminal 10-1, is moving from cell to cell as would typically occur in a cellular system. Suppose for example wireless terminal 10-1 enters into the cell containing base station 13-1 and registers for a either an incoming call or an outgoing call. The serving MSC 12 will generate a Call Record, where it accumulates information concerning the number of Call Units as previously described. Further suppose that wireless terminal 10-1 roams (indicated by the dashed line 10-1a) out of the cell serviced by base station 13-1 and into the cell serviced by base station 13-4. MSC 12 will then hand-off the call to MSC 20 using techniques well known in the art. When this happens, the Call Record generated by MSC 12 for the communication is closed by MSC 12 and a new Call Record is generated by MSC 20 for the communication. Further suppose that wireless terminal 10-1 then roams (indicated by the dashed line 10-1b) out of the cell serviced by base station 13-4 and into the cell serviced by base station 13-6, requiring MSC 20 to hand-off the call to MSC 30, and the call is completed while wireless terminal 10-1 is in the cell serviced by base station 13-6. When the hand-off from MSC 20 to MSC 30 occurs, the Call Record for MSC 20 is closed and a new Call Record for MSC 30 is created. When the call is ended, the billing record for MSC 30 will also be closed.

All of the Call Records for the above call, i.e., the Call Record for MSC 12, MSC 20 and MSC 30, are associated with the call by a unique Call Reference Number (CRN). Each closed Call Record is delivered to billing center 40 as previously described (indicated by dashed lines 12-1, 20-1 and 30-1 in Fig. 2). The billing center 40 will then concatenate the Call Records, apply the applicable contract rates and taxes, and assemble a single billing record, also known as Advice of Charge (AOC) information, as previously described with respect to Fig. 1.

In accordance with the present invention, once a complete billing record for the call has been compiled by billing center 40, the billing record is sent to a Short Message Service (SMS) Message Center 50 via communication link 42. SMS signaling technology is well known in the art. Cellular radio networks and mobile stations are now implemented with digital technology, thereby permitting the integration of data transmission services with the voice communication service of analog cellular networks. Data transmission services include SMS signaling technology which enables short textual messages to be sent over a digital control channel to a wireless terminal for display on the wireless terminal's display screen. SMS signaling utilizes message storage and forwarding techniques by storing SMS messages in a message center, such as SMS Message Center 50, until the wireless terminal is assigned a control channel.

Upon receiving the billing record for the call, SMS Message Center 50 will then query the Home Location Register (HLR) 60 via communication link 52 to determine the current location, i.e., address, of the MSC with which wireless terminal 10-1 is registered, since wireless terminal 10-1 may no longer be registered with MSC 30, as wireless terminal 10-1 may have roamed out of base station 13-6 coverage area (indicated by dashed line 10-1c) or registered with a new system after the call was completed.

HLR 60, as is known in the art, maintains information as to the current location of wireless terminal 10-1 based on the MSC with which it is currently registered. When a wireless terminal, such as wireless terminal 10-1, registers with an MSC that is not in its home system, the identity of the wireless terminal and information related to the wireless terminal are stored in a Visitor Location Register (VLR) in the registering MSC as is known in the art. The information contained in the VLR provides an indication as to where the wireless terminal is located in the system. This information is currently used for delivery of a call. The information in the VLR is shred with the HLR of the wireless terminal, therefore allowing the HLR to know the location of the wireless terminal even when it registers outside of its home system. When SMS message center 50 queries the Home Location Register (HLR) 60, known as an SMS request, to determine the current location, i.e., address, of the MSC with which wireless terminal 10-1 is registered, HLR 60 will return to SMS Message Center 50 a parameter, called the SMS address, which indicates the specific address of the MSC that is currently servicing the wireless terminal 10-1. As illustrated in Fig. 2, wireless terminal 10-1 may have roamed into the cell serviced by base station 13-n and MSC 70. Thus, HLR 60, based on information provided to it from VLR 72, will return to SMS Message Center 50 the address of MSC 70 via communication link 52, since MSC 70 is currently servicing wireless terminal 10-1.

Upon receiving the information as to the address of the current MSC, i.e., MSC 70, servicing wireless terminal 10-1, SMS Message Center 50 will send the AOC information to MSC 70 via communication link 54 in SMS format. MSC 70 can then transmit the SMS AOC information message to wireless terminal 10-1 via base station 13-n, where it can be displayed on a display 90 of wireless terminal 10-1. If the wireless terminal 10-1 is not currently registered with any MSC, the SMS AOC information message will be stored by SMS Messaging Center 50 until HLR 60 returns an address of a servicing MSC (when wireless terminal 10-1 does register), at which point it will be forwarded to wireless terminal 10-1.

The AOC information carried by the SMS AOC information message from SMS Message Center 50 to MSC 70 will be complete and accurate for the call, since the billing center has prepared the entire billing record for the entire call. Thus, the AOC information may include the date, time, itemized cost, final total charges, etc. of the call, and the information included in the AOC will exactly match the printed bill that is delivered to the customer at the end of the month.

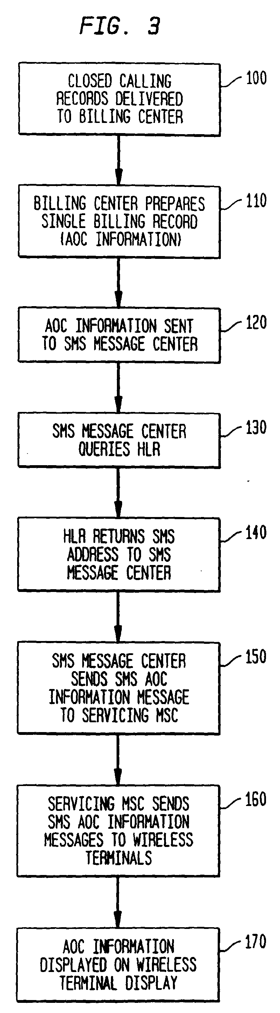

Fig. 3 illustrates in flowchart form a method for delivering AOC information to a wireless terminal in accordance with the present invention. Recall the previous example described with respect to Fig. 2 in which a wireless terminal 10-1 engages in a call that starts in the cell serviced by base station 13-1, roams into the cell serviced by base station 13-4 and finishes in the cell serviced by base station 13-6. In step 100, the closed Calling Records from each MSC which serviced the call, i.e., in this example MSC 12, MSC 20 and MSC 30, are delivered to the billing center 40 as is known in the art. While the present example is illustrated with three MSCs servicing the call, it is to be understood that a call may be serviced by any number of MSCs. The billing center 40 will then concatenate all of the Call Records, apply the applicable contract rates and taxes for each Call Record, and in step 110 assemble a single billing record, also known as Advice of Charge (AOC) information, as previously described with respect to Fig. 1.

In step 120, once a complete billing record for the call has been compiled by billing center 40, the billing record is sent to a Short Message Service (SMS) Message Center 50.

In step 130, SMS Message Center 50 queries the Home Location Register (HLR) 60 to determine the current location, i.e., address, of the MSC with which wireless terminal 10-1 is registered. As previously described with respect to Fig. 2, HLR 60 maintains information as to the current location of wireless terminal 10-1 based on the MSC with which it is currently registered. When SMS message center 50 queries the Home Location Register (HLR) 60, known as an SMS request, to determine the current location, i.e., address, of the MSC with which wireless terminal 10-1 is registered, HLR 60 will return to SMS Message Center 50 a parameter, called SMS address, which indicates the specific address of the MSC that is currently servicing the wireless terminal 10-1 in step 140. It should be understood that servicing includes handling an actual call to or from wireless terminal 10-1, as well as registering wireless terminal 10-1 to receive or make a call.

Upon receiving the information as to the address of the current MSC servicing wireless terminal 10-1, SMS Message Center 50 will send the AOC information in SMS format to MSC that is currently servicing wireless terminal 10-1 in step 150. In step 160, the servicing MSC transmits the SMS AOC information message to wireless terminal 10-1 via a base station connected to the servicing MSC. If the wireless terminal 10-1 is not currently registered with any MSC, the SMS AOC information message will be stored by SMS Messaging Center 50 until HLR 60 returns an address of a servicing MSC (when wireless terminal 10-1 does register), at which point it will be forwarded to wireless terminal 10-1. In step 170, the AOC information may be displayed on a display 90 of wireless terminal 10-1.

Thus, in accordance with the present invention, accurate and complete advice of charge (AOC) information is delivered to a wireless terminal utilizing SMS technology as soon as the advice of charge information is assembled by a billing center and the wireless terminal registers with a system.

It is to be understood that use of an SMS mechanism to deliver the SMS AOC information message, as is known in the art, allows for the message to be delivered to wireless terminal 10-1 on a Control Channel, Traffic Channel, or Analog Voice Channel, depending upon which channel is currently being monitored by wireless terminal 10-1. Additionally, if the message is delivered on the Traffic Channel, the contents of the SMS message can be encrypted to protect sensitive customer billing information.

Reference has been made to embodiments in describing the invention. However, additions, deletions, substitutions, or other modifications which would fall within the scope of the invention defined in the claims may be implemented by those skilled in the art and familiar with the disclosure of the invention without departing from the spirit or scope of the invention. Also, although the invention is preferably implemented in a combination of hardware and software, it may be implemented in hardware, software, or any combination of the two. All are deemed equivalent with respect to the operation of the invention. Accordingly, the invention is not to be considered as limited by the foregoing description, but is only limited by the scope of the appended claims.

## Claims

1. A system for delivering advice of charge (AOC) information to a wireless terminal in a wireless telecommunications network, said AOC information relating to a communication in which said wireless terminal previously engaged, said system comprising:
a message center adapted to receive said AOC information from a billing center; and
a Home Location Register, said Home Location Register adapted to be queried by said message center to determine and return to said message center a current location of said wireless terminal,
wherein said message center sends a message to said wireless terminal based on said current location returned by said Home Location Register, said message including at least a portion of said AOC information.

2. The system according to claim 1, wherein said billing center compiles said AOC information from a call record for said communication established by at least one Mobile Switching Center that serviced said communication in which said wireless terminal engaged.

3. The system according to claim 1, wherein said message is sent to said wireless terminal via a Mobile Switching Center that is currently servicing said wireless terminal.

4. The system according to claim 3, wherein said current location of said wireless terminal is determined by an address of said Mobile Switching Center that is currently servicing said wireless terminal.

5. The system according to claim 1, wherein said AOC information is displayed by said wireless terminal.

6. A system for delivering advice of charge (AOC) information received from a billing center to a wireless terminal in a wireless telecommunications network, said AOC information relating to a communication in which said wireless terminal previously engaged, said system comprising:
a message center adapted to receive said AOC information and query a Home Location Register to determine a current location of said wireless terminal, said message center further adapted to receive a current location of said wireless terminal from said Home Location Register,
wherein said message center sends a message to said wireless terminal based on said current location received from said Home Location Register, said message including at least a portion of said AOC information.

7. The system according to claim 1 or 6, wherein said message center is a short message service (SMS) message center.

8. The system according to claim 7, wherein said message sent to said wireless terminal is an SMS message.

9. The system according to claim 3 or 6 wherein said message is sent to said wireless terminal on a control channel.

10. The system according to claim 3 or 6, wherein said message is sent to said wireless terminal on a traffic channel.

11. The system according to claim 10, wherein at least a portion of said message is encrypted before being sent on said traffic channel.

12. The system according to claim 3 or 6, wherein said message is sent to said wireless terminal on a voice channel.

13. The system according to claim 1 or 6, wherein said AOC information includes a billing record for said communication.

14. The system according to claim 13, wherein said billing record includes a date of said communication.

15. The system according to claim 13 wherein said billing record includes a time of said communication.

16. The system according to claim 13 wherein said billing record includes an itemized cost of said communication.

17. The system according to claim 13, wherein said billing record includes a total cost of said communication.

18. A method of delivering AOC information to a wireless terminal in a wireless telecommunications network, said AOC information relating to a communication in which said wireless terminal previously engaged, said method comprising:
delivering said AOC information to a message center;
requesting from a Home Location Register a current location of said wireless terminal;
returning from said Home Location Register a current location of said wireless terminal; and
sending a message including at least a portion of said AOC information from said message center to said wireless terminal based on said current location returned by said Home Location Register.

19. The method according to claim 18, wherein before said delivering step, said method further comprises:
compiling said AOC information from at least one call record for said communication established by at least one Mobile Switching Center that serviced said communication.

20. The method according to claim 19, wherein said step of delivering further comprises:
delivering said AOC information to a short message service (SMS) message center.

21. The method according to claim 20 wherein said sending step further comprises:
sending an SMS message including at least a portion of said AOC information from said SMS message center to said wireless terminal.

22. The method according to claim 18 wherein said sending step further comprises:
sending said message to said wireless terminal via a Mobile Switching Center that is currently servicing said wireless terminal.

23. The method according to claim 22, wherein said returning step further comprises:
returning from said Home Location Register an address of said Mobile Switching Center that is currently servicing said wireless terminal.

24. The method according to claim 18, further comprising: displaying said AOC information on a display of said wireless terminal.

25. A method for delivering advice of charge (AOC) information to a wireless terminal in a wireless telecommunications network, said AOC information relating to a communication in which said wireless terminal previously engaged, said method comprising:
querying a Home Location Register to determine a current location of said wireless terminal;
receiving a current location of said wireless terminal from said Home Location Register; and
sending a message to said wireless terminal based on said current location received from said Home Location Register, said message including at least a portion of said AOC information.

26. The method according to claim 25 wherein before said step of querying, said method further comprises:
receiving said AOC information from a billing center.

27. The method according to claim 25, wherein said sending step further comprises:
sending a short message service (SMS) message to said wireless terminal.

28. The method according to claim 22 or 26 wherein said sending step further comprises:
sending said message to said wireless terminal on a control channel.

29. The method according to claim 22 or 26, wherein said sending step further comprises:
sending said message to said wireless terminal on a traffic channel.

30. The method according to claim 29, wherein before said step of sending, said method further comprises:
encrypting at least a portion of said message.

31. The method according to claim 22 or 26, wherein said sending step further comprises:
sending said message to said wireless terminal on a voice channel.

32. The method according to claim 18 or 26, wherein said AOC information includes a billing record for said communication.

33. The method according to claim 32, wherein said billing record includes a date of said communication.

34. The method according to claim 32, wherein said billing record includes a time of said communication.

35. The method according to claim 32, wherein said billing record includes an itemized cost of said communication.

36. The method according to claim 32, wherein said billing record includes a total cost of said communication.
